# EUROPEAN PATENT SPECIFICATION

(11) **EP 2 085 646 B1**
(45) Date of publication and mention of the grant of the patent: **28.07.2010**
(21) Application number: 08001882.3
(22) Date of filing: 01.02.2008
(51) Int. Cl.: F16H 3/66

(54) **Automatic transmission**
Automatikgetriebe
Transmission automatique

(43) Date of publication of application: 05.08.2009
(73) Proprietor: GM Global Technology Operations, Inc., Detroit MI 48265-3 (US)
(72) Inventor: Rihn, Matthieu, 67100 Strasbourg (FR); Schreiber, Herve, 67210 Obernai (FR); Ensminger, Julien, 67530 Klingent (FR)
(74) Representative: Kraenzmer, Martin

(56) References cited:
- DE-A1- 19 949 507
- DE-A1-102005 001 840

## Description

The invention relates to an automatic transmission.

In the field of automatic transmissions, there is a tendency towards 7 or 8 speed transmissions. The interest of such transmissions is to obtain at least two so-called "overdrive" ratios after the ratio in which the maximum speed is reached. These ratios allow the engine to turn rather low on the freeway thereby reducing fuel consumption. Compared to a 7 speed transmission, a 8 speed transmission has the advantage to provide one more ratio that will improve the vehicle performance in terms of accelerations (this ratio will be added between the first gear and the gear of maximum vehicle speed), fuel economy and emission standards.

The documents GB 2 411 443 A and DE 10 2005 013 382 A1 describe such automatic transmissions.

Document DE 10 2005 001840 A1, which is considered as being the closest prior art, discloses the following features of independent claims 1 and 2.

An automatic transmission comprising: an input shaft, an output shaft, a stationary member, an input gearset being configured as Ravigneaux gearset, a sun gear of which being constantly fixed to the stationary member in order to provide reaction and a ring gear of which being constantly connected to the input shaft, an output gearset being configured as Ravigneaux gearset in which a first planet gear transmits the power from a first sun gear to a first ring gear, having a second sun gear and in which the long pinion meshes with the first planet gear; and six clutches, eight forward speeds and a reverse speed.

The object of the invention is to realise a new economically interesting concept of an automatic transmission with 8 forward speeds and one reverse speed in which single upshifts and downshifts are done through a single clutch to single clutch transition.

This object is achieved by an automatic transmission comprising
an input shaft,
an output shaft,
a stationary member,
as input gearset being configured as Ravigneaux gearset, a sun gear of which being constantly fixed to the stationary member in order to provide reaction and a ring gear of which being constantly connected to the input shaft;
an output gearset being configured as Ravigneaux gearset in which a first planet gear transmits the power from a first sun gear to a first ring gear and a second planet gear transmits the power from a second sun gear to a second ring gear and in which the long pinion meshes with the first planet gear and the long pinion meshes with the second ring gear, the planet pinions carrier of which being constantly connected to the output shaft; and
first, second, third, forth, fifth and sixth clutches, the first forward speed being achieved when the first clutch and the second clutch are engaged, the second forward speed being achieved when the first clutch and the third clutch are engaged, the third forward speed being achieved when the first clutch and the forth clutch are engaged, the forth forward speed being achieved when the third clutch and the forth clutch are engaged, the fifth forward speed being achieved when the forth clutch and the fifth clutch are engaged, the sixth forward speed being achieved when the third clutch and the fifth clutch are engaged, the seventh forward speed being achieved when the third clutch and the sixth clutch are engaged, the eigth forward speed being achieved when the fifth clutch and the sixth clutch are engaged and the reverse speed is achieved when the first clutch and the fifth clutch are engaged.

The object of the invention is also achieved by an automatic transmission comprising
an input shaft,
an output shaft,
a stationary member,
an input gearset being configured as Ravigneaux gearset, a sun gear of which being constantly fixed to the stationary member in order to provide reaction and a ring gear of which being constantly connected to the input shaft,
an output gearset being configured as Ravigneaux gearset in which a first planet gear transmits the power from a first sun gear to a first ring gear and a long pinion transmits the power from a second sun gear to a second ring gear and in which the long pinion meshes with the first planet gear, the planet pinions carrier of which being constantly connected to the output shaft, and
first, second, third, forth, fifth and sixth clutches, the first forward speed being achieved when the first clutch and the second clutch are engaged, the second forward speed being achieved when the first clutch and the third clutch are engaged, the third forward speed being achieved when the first clutch and the forth clutch are engaged, the forth forward speed being achieved when the third clutch and the forth clutch are engaged, the fifth forward speed being achieved when the forth clutch and the fifth clutch are engaged, the sixth forward speed being achieved when the third clutch and the fifth clutch are engaged, the seventh forward speed being achieved when the third clutch and the sixth clutch are engaged, the eigth forward speed being achieved when the fifth clutch and the sixth clutch are engaged and the reverse speed is achieved when the first clutch and the fifth clutch are engaged.

The automatic transmissions of the invention have only 2 gearsets and 6 clutches. The Ravigneaux gearset according to the invention allows to obtain a Ravigneaux gearset for which λ₁ < 0, λ₂ < 0, and K < 0 with high efficiency and good clearance between the gears.

Each of the two alternative configurations can be preferably used depending on the desired values of λ₁, λ₂ and K. It is also possible to inverse the front gearset and the rear gearset depending on the desired values of λ₁, λ₂ and K. Of course, the configurations are susceptible to be used if they were seen in a mirror.

In a preferred embodiment of the invention, the first clutch is a braking clutch and the second, third, forth, fifth and sixth clutches are rotating clutches and in which the braking clutch is configured to selectively couple the stationary member with a ring gear of the output gearset, the first rotating clutch is configured to selectively couple a ring gear of the input gearset with a sun gear of the output gearset, the second rotating clutch is configured to selectively couple a sun gear of the input gearset with a sun gear of the output gearset, the third rotating clutch is configured to selectively couple a ring gear of the input gearset with a ring gear of the output gearset, the forth rotating clutch is configured to selectively couple a ring gear of the input gearset with a sun gear of the output gearset, the fifth rotating clutch being configured to selectively couple a sun gear of the input gearset with a ring gear of the output gearset; and the input gearset is configured as Ravigneaux gearset in which a long pinion transmits the power from a first sun gear to a first ring gear and a planet gear and a long pinion transmit the power from a second sun gear to a second ring gear and in which the long pinion meshes with both the second ring gear and the second planet gear, the first sun gear of which being constantly connected to the stationary member, and the first ring gear of which being constantly connected to the input shaft.

In the following, the invention will be described in detail with reference to the FIGURES wherein
FIGURE 1 shows a first embodiment of the invention,
FIGURE 2 shows a second embodiment of the invention,
FIGURE 3 shows the first variant of the Ravigneaux gearset used according to the invention,
FIGURE 4 shows the second variant of the Ravigneaux gearset used according to the invention.

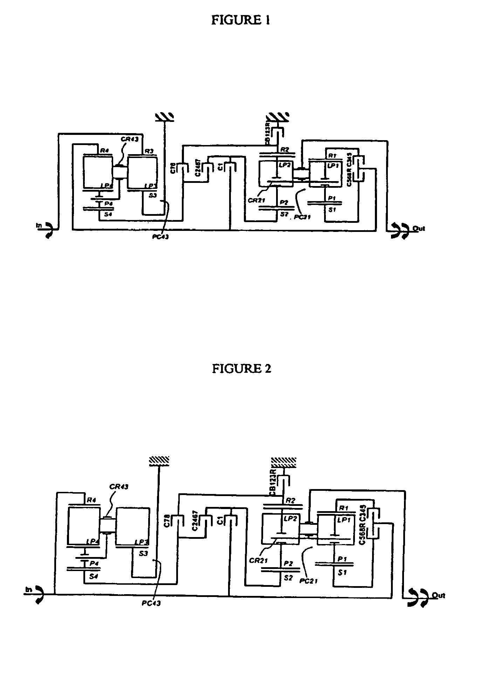

The automatic transmission of FIGURE 1 and of FIGURE 2 have an input gearset PC43 and an output gearset PC21. It has four decks which are called deck 1, deck 2 (of the output assembly) and deck 3, deck 4 (of the input assembly) beginning from the rear side of the transmission.

The input gearset PC43 is a Ravigneaux gearset, that is to say that the gearset is composed of two decks (deck 4 and deck 3) with a common carrier CR43 and a long pinion LP3, LP4 making the link between the two decks. The long pinion can be stepped (which means that the front and the rear gears of the long pinion may have different gear data: tooth count, pressure and helix angles, etc.) or not stepped. The input gearset PC43 comprises two sun gears S4, S3, a planet gear P4 and two ring gears R4, R3. The sun gear S3 is constantly fixed to the stationary member and provides reaction.

According to the embodiment shown in FIGURE 1, the ring gear R3 of the input gearset PC43 is constantly connected to the input shaft In. According to the embodiment of FIGURE 2, the ring gear R4 of the input gearset PC43 is connected to the input shaft In, but it is also possible that both the ring gears R4 and R3 of the input gearset PC43 are connected to the input shaft In, so that there are three possible configurations for the connection to the input shaft In: R4, R3 or R4 and R3. Except for this difference, the gearsets shown in FIGURE 1 and in FIGURE 2 are identical.

The output gearset PC21 is also configured as a Ravigneaux gearset and comprises two sun gears S1, S2, two ring gears R1, R2 and two planet gears P1, P2. The planet pinions carrier CR21 of the output gearset PC21 is constantly connected to the output shaft Out.

There are five rotating clutches C1, C2467, C345, C568R and C78 and one braking clutch CB123R.

The first rotating clutch C1 is configured to selectively couple the ring gear R4 of the forth deck of the input gearset PC43 with the sun gear S2 of the first deck of the output gearset PC21, the second rotating clutch C2467 is configured to selectively couple the sun gear S4 of the forth deck of the input gearset PC43 with the sun gear S2 of the second deck of the output gearset PC21, the third rotating clutch C345 is configured to selectively couple the ring gear R4 of the input gearset PC43 with the ring gear R1 of the first deck of the output gearset PC21, the fourth rotating clutch C568R is configured to selectively couple the ring gear R4 of the forth deck of the input gearset PC43 with the sun gear S1 of the first deck of the output gearset PC21, the fifth rotating clutch C78 is configured to selectively couple the sun gear S4 of the input gearset PC43 with the ring gear R2 of the second deck of the output gearset PC21 and the braking clutch CB123R is configured to selectively couple the stationary member with the ring gear R2 of the second deck of the output gearset PC21.

The following table shows examples of available ratios and the corresponding spreads as well as the shift logic sequence of the clutches of the automatic transmissions according to FIGURES 1 and 2.

| Gear state | Gear ratio | Ratio step | CB123R static | C1 dynamic | C2467 dynamic | C345 dynamic | C568R dynamic | C78 dynamic |
|---|---|---|---|---|---|---|---|---|
| Rev | - 2,516 | | X | | | | X | |
| N | | -0,53 | | | | | | |
| 1st | 4,759 | | X | X | | | | |
| 2nd 2, | 958 | 1, 61 | X | | X | | | |
| 3rd | 2,019 | 1,47 | X | | | X | | |
| 4th | 1, 293 | 1, 56 | | | X | X | | |
| 5th | 1,000 | 1,29 | | | | X | X | |
| 6th | 0,773 | 1,29 | | | X | | X | |
| 7th | 0,622 | 1,24 | | | X | | | X |
| 8th | 0,540 | 1,15 | | | | | X | X |

These values are given for the following teeth ratios:

| R4/S4 | R3/S3 | R2/S2 | R1/S1 | (S3/S4)*(LP4/LP3) | (S1/S2)*(LP2/LP1) |
|---|---|---|---|---|---|
| 3,30 | 2,78 | 3,76 | 3,45 | 1,19 | 1,07 |

It can be seen from the table that eight forward speeds and one reverse speed are provided. Single upshifts and downshifts are done through a single clutch to single clutch transition.

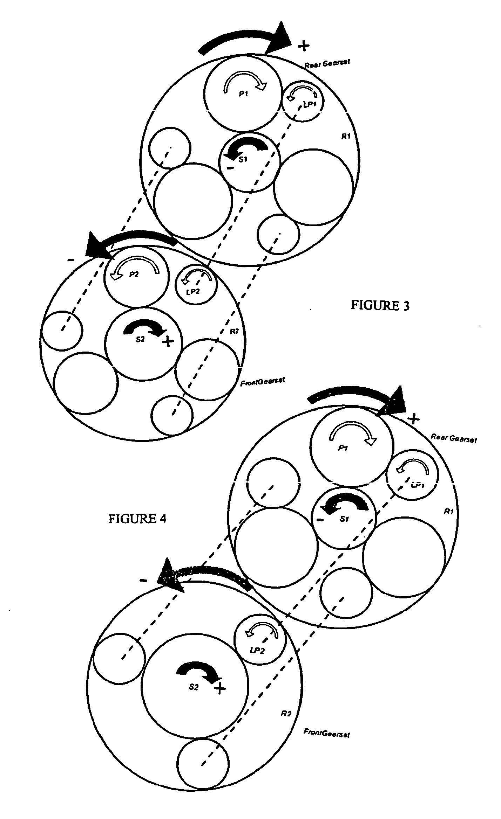

FIGURE 3 shows in detail a first Ravigneaux gearset as used in the output gearset of the present invention. It differs from the classical configuration in that LP1 is not in the power path between S1 and R1 and LP2 is not in the power path between S2 and R2. Concretely, P1 transmits the power from S1 to R1 in the rear gearset and P2 transmits the power from S2 to R2 in the front gearset. LP1 meshes only with P1 and LP2 meshes only with R2. In each gearset, there are three planet gears meshing with S1 and R1 and, respectively with S2 and R2, as well as three long pinions LP1, respectively LP2.

In the second Ravigneaux gearset according to the output gearset of the present invention which is shown in FIGURE 4, the planet gears and the long pinions are also present in triplicate, but in this configuration, P1 transmits the power from S1 to R1 and LP2 transmits the power from S2 to R2. LP1 meshes only with P1. In this second gearset, there are no planet gears in the front gearset.

As can be seen in FIGURES 3 and 4, the front and the rear gearsets turn inversely. A person skilled in the art will choose between the first and the second configuration of the invention according to the required values of λ₁, λ₂, and K. Depending on these values, the front gearset and the rear gearset may also be inversed.

For each gearset, the configurations can also be used as if they were seen in a mirror: For example, in the first configuration of the invention, LP1 may mesh with P1 as well on the left as on the right side of P1.

## Claims

1. An automatic transmission comprising
an input shaft (In),
an output shaft (Out),
a stationary member,
an input gearset (PC43) being configured as Ravigneaux gearset, a sun gear (S3) of which being constantly fixed to the stationary member in order to provide reaction and a ring gear (R3, R4) of which being constantly connected to the input shaft (In);
an output gearset (PC21) being configured as Ravigneaux gearset in which a first planet gear (P1) transmits the power from a first sun gear (S1) to a first ring gear (R1) and a second planet gear (P2) transmits the power from a second sun gear (S2) to a second ring gear (R2) and in which the long pinion (LP1) meshes with the first planet gear (P1) and the long pinion (LP2) meshes with the second ring gear (R2), the planet pinions carrier of which being constantly connected to the output shaft (Out); and
first, second, third, forth, fifth and sixth clutches (CB123R, C1, C2467, C345, C568R and C78), the first forward speed being achieved when the first clutch (CB123R) and the second clutch (C1) are engaged, the second forward speed being achieved when the first clutch (CB123R) and the third clutch (C2467) are engaged, the third forward speed being achieved when the first clutch (CB123R) and the forth clutch (C345) are engaged, the forth forward speed being achieved when the third clutch (C2467) and the forth clutch (C345) are engaged, the fifth forward speed being achieved when the forth clutch (C345) and the fifth clutch (C568R) are engaged, the sixth forward speed being achieved when the third clutch (C2467) and the fifth clutch (C568R) are engaged, the seventh forward speed being achieved when the third clutch (C2467) and the sixth clutch (C78) are engaged, the eigth forward speed being achieved when the fifth clutch (C568R) and the sixth clutch (C78) are engaged and the reverse speed is achieved when the first clutch (CB123R) and the fifth clutch (C568R) are engaged.

2. An automatic transmission comprising
an input shaft (In),
an output shaft (Out),
a stationary member,
an input gearset (PC43) being configured as Ravigneaux gearset, a sun gear (S3) of which being constantly fixed to the stationary member in order to provide reaction and a ring gear (R3, R4) of which being constantly connected to the input shaft (In),
an output gearset (PC21) being configured as Ravigneaux gearset in which a first planet gear (P1) transmits the power from a first sun gear (S1) to a first ring gear (R1) and a long pinion (LP2) transmits the power from a second sun gear (S2) to a second ring gear (R2) and in which the long pinion (LP1) meshes with the first planet gear (P1), the planet pinions carrier of which being constantly connected to the output shaft (Out); and
first, second, third, forth, fifth and sixth clutches (CB123R, C1, C2467, C345, C568R and C78), the first forward speed being achieved when the first clutch (CB123R) and the second clutch (C1) are engaged, the second forward speed being achieved when the first clutch (CB123R) and the third clutch (C2467) are engaged, the third forward speed being achieved when the first clutch (CB123R) and the forth clutch (C345) are engaged, the forth forward speed being achieved when the third clutch (C2467) and the forth clutch (C345) are engaged, the fifth forward speed being achieved when the forth clutch (C345) and the fifth clutch (C568R) are engaged, the sixth forward speed being achieved when the third clutch (C2467) and the fifth clutch (C568R) are engaged, the seventh forward speed being achieved when the third clutch (C2467) and the sixth clutch (C78) are engaged the eigth forward speed being achieved when the fifth clutch (C568R) and the sixth clutch (C78) are engaged and the reverse speed is achieved when the first clutch (CB123R) and the fifth clutch (C568R) are engaged.

3. The automatic transmission of claim 1 or of claim 2 in which the first clutch is a braking clutch (CB123R) and the second, third, forth, fifth and sixth clutches (C1, C2467, C345, C568R and C78) are rotating clutches and in which the braking clutch (CB123R) is configured to selectively couple the stationary member with a ring gear (R2) of the output gearset (PC21), the first rotating clutch (C1) is configured to selectively couple a ring gear (R4) of the input gearset (PC43) with a sun gear (S2) of the output gearset (PC21), the second rotating clutch (C2467) is configured to selectively couple a sun gear (S4) of the input gearset (PC43) with a sun gear (S2) of the output gearset (PC21), the third rotating clutch (C345) is configured to selectively couple a ring gear (R4) of the input gearset (PC43) with a ring gear (R1) of the output gearset (PC21), the forth rotating clutch (C568R) is configured to selectively couple a ring gear (R4) of the input gearset (PC43) with a sun gear (S1) of the output gearset (PC21), the fifth rotating clutch (C78) being configured to selectively couple a sun gear (S4) of the input gearset (PC43) with a ring gear (R2) of the output gearset (PC21); and the input gearset (PC43) is configured as Ravigneaux gearset in which a long pinion (LP3) transmits the power from a first sun gear (S3) to a first ring gear (R3) and a planet gear (P4) and a long pinion (LP4) transmit the power from a second sun gear (S4) to a second ring gear (R4) and in which the long pinion (LP4) meshes with both the second ring gear (R4) and the second planet gear (P4), the first sun gear (S3) of which being constantly connected to the stationary member, and the first ring gear (R3) of which being constantly connected to the input shaft (In).

## Patentansprüche

1. Automatikgetriebe, Folgendes umfassend:
eine Getriebeeingangswelle (In),
eine Abtriebswelle (Out)
ein stationäres Element,
wobei ein Eingangs-Radsatz (PC43) als Ravigneaux-Satz konfiguriert ist, von dem ein Sonnenrad (S3) konstant am stationären Element befestigt ist, um eine Reaktion zu gewährleisten, und ein Hohlrad (R3, R4) konstant mit der Getriebeeingangswelle (In) verbunden ist;
wobei ein Abtriebs-Radsatz (PC21) als Ravigneaux-Satz konfiguriert ist, in dem ein erstes Planetenrad (P1) die Kraft von einem ersten Sonnenrad (S1) auf ein erstes Hohlrad (R1) überträgt und ein zweites Planetenrad (P2) die Kraft von einem zweiten Sonnenrad (S2) auf ein zweites Hohlrad (R2) überträgt und in dem das lange Ritzel (LP1) in das erste Planetenrad (P1) eingreift und das lange Ritzel (LP2) in das zweite Hohlrad (R2) eingreift, dessen Planetenritzelträger konstant mit der Abtriebswelle (Out) verbunden ist; und
erste, zweite, dritte, vierte, fünfte und sechste Kupplungen (CB123R, C1, C2467, C345, C568R und C78), wobei der erste Vorwärtsgang erreicht wird, wenn die erste Kupplung (CB123R) und die zweite Kupplung (C1) eingelegt sind, wobei der zweite Vorwärtsgang erreicht wird, wenn die erste Kupplung (CB123R) und die dritte Kupplung (C2467) eingelegt sind, wobei der dritte Vorwärtsgang erreicht wird, wenn die erste Kupplung (CB123R) und die vierte Kupplung (C345) eingelegt sind, wobei der vierte Vorwärtsgang erreicht wird, wenn die dritte Kupplung (C2467) und die vierte Kupplung (C345) eingelegt sind, wobei der fünfte Vorwärtsgang erreicht wird, wenn die vierte Kupplung (C345) und die fünfte Kupplung (C568R) eingelegt sind, wobei der sechste Vorwärtsgang erreicht wird, wenn die dritte Kupplung (C2467) und die fünfte Kupplung (C568R) eingelegt sind, wobei der siebente Vorwärtsgang erreicht wird, wenn die dritte Kupplung (C2467) und die sechste Kupplung (C78) eingelegt sind, wobei der achte Vorwärtsgang erreicht wird, wenn die fünfte Kupplung (C568R) und die sechste Kupplung (C78) eingelegt sind, und wobei der Rückwärtsgang erreicht wird, wenn die erste Kupplung (CB123R) und die fünfte Kupplung (C568R) eingelegt sind.

2. Automatikgetriebe, Folgendes umfassend:
eine Getriebeeingangswelle (In),
eine Abtriebswelle (Out)
ein stationäres Element,
wobei ein Eingangs-Radsatz (PC43) als Ravigneaux-Satz konfiguriert ist, von dem ein Sonnenrad (S3) konstant am stationären Element befestigt ist, um eine Reaktion zu gewährleisten, und ein Hohlrad (R3, R4) konstant mit der Getriebeeingangswelle (In) verbunden ist;
wobei ein Abtriebs-Radsatz (PC21) als Ravigneaux-Satz konfiguriert ist, in dem ein erstes Planetenrad (P1) die Kraft von einem ersten Sonnenrad (S1) auf ein erstes Hohlrad (R1) überträgt und ein langes Ritzel (LP2) die Kraft von einem zweiten Sonnenrad (S2) auf ein zweites Hohlrad (R2) überträgt und in dem das lange Ritzel (LP1) in das erste Planetenrad (P1) eingreift, wobei dessen Planetenritzelträger konstant mit der Abtriebswelle (Out) verbunden ist; und
erste, zweite, dritte, vierte, fünfte und sechste Kupplungen (CB123R, C1, C2467, C345, C568R und C78), wobei der erste Vorwärtsgang erreicht wird, wenn die erste Kupplung (CB123R) und die zweite Kupplung (C1) eingelegt sind, wobei der zweite Vorwärtsgang erreicht wird, wenn die erste Kupplung (CB123R) und die dritte Kupplung (C2467) eingelegt sind, wobei der dritte Vorwärtsgang erreicht wird, wenn die erste Kupplung (CB123R) und die vierte Kupplung (C345) eingelegt sind, wobei der vierte Vorwärtsgang erreicht wird, wenn die dritte Kupplung (C2467) und die vierte Kupplung (C345) eingelegt sind, wobei der fünfte Vorwärtsgang erreicht wird, wenn die vierte Kupplung (C345) und die fünfte Kupplung (C568R) eingelegt sind, wobei der sechste Vorwärtsgang erreicht wird, wenn die dritte Kupplung (C2467) und die fünfte Kupplung (C568R) eingelegt sind, wobei der siebente Vorwärtsgang erreicht wird, wenn die dritte Kupplung (C2467) und die sechste Kupplung (C78) eingelegt sind, wobei der achte Vorwärtsgang erreicht wird, wenn die fünfte Kupplung (C568R) und die sechste Kupplung (C78) eingelegt sind, und wobei der Rückwärtsgang erreicht wird, wenn die erste Kupplung (CB123R) und die fünfte Kupplung (C568R) eingelegt sind.

3. Automatikgetriebe gemäß Anspruch 1 oder Anspruch 2, in dem die erste Kupplung eine Bremskupplung (CB123R) ist und die zweite, dritte, vierte, fünfte und sechste Kupplung (C1, C2467, C345, C568R und C78) Rotationskupplungen sind und in dem die Bremskupplung (CB123R) so konfiguriert ist, dass sie selektiv das stationäre Element mit einem Hohlrad (R2) des Abtriebs-Radsatzes (PC21) koppelt, und die erste Rotationskupplung (C1) so konfiguriert ist, dass sie selektiv ein Hohlrad (R4) des Eingangs-Radsatzes (PC43) mit einem Sonnenrad (S2) des Abtriebs-Radsatzes (PC21) koppelt, und die zweite Rotationskupplung (C2467) so konfiguriert ist, dass sie selektiv ein Sonnenrad (S4) des Eingangs-Radsatzes (PC43) mit einem Sonnenrad (R2) des Abtriebs-Radsatzes (PC21) koppelt, und die dritte Rotationskupplung (C345) so konfiguriert ist, dass sie selektiv ein Hohlrad (R4) des Eingangs-Radsatzes (PC43) mit einem Hohlrad (R1) des Abtriebs-Radsatzes (PC21) koppelt, und die vierte Rotationskupplung (C568R) so konfiguriert ist, dass sie selektiv ein Hohlrad (R4) des Eingangs-Radsatzes (PC43) mit einem Sonnenrad (S1) des Abtriebs-Radsatzes (PC21) koppelt, und die fünfte Rotationskupplung (C78) so konfiguriert ist, dass sie selektiv ein Sonnenrad (S4) des Eingangs-Radsatzes (PC43) mit einem Hohlrad (R2) des Abtriebs-Radsatzes (PC21) koppelt; und wobei der Eingangs-Radsatz (PC43) als Ravigneaux-Satz konfiguriert ist, in dem ein langes Ritzel (LP3) die Kraft von einem ersten Sonnenrad (S3) auf ein erstes Hohlrad (R3) und ein Planetenrad (P4) und ein langes Ritzel (LP4) die Kraft von einem zweiten Sonnenrad (S4) auf ein zweites Hohlrad (R4) übertragen, und in dem das lange Ritzel (LP4) in das zweite Hohlrad (R4) und in das zweite Planetenrad (P4) eingreift, dessen erstes Sonnenrad (S3) konstant mit dem stationären Element verbunden ist, und dessen erstes Hohlrad (R3) konstant mit der Getriebeeingangswelle (In) verbunden ist.

## Revendications

1. Transmission automatique comprenant
un arbre d'entrée (In),
un arbre de sortie (Out),
un élément stationnaire,
un train d'entrée (PC43) configuré comme un train de Ravigneaux, dans lequel une roue solaire (S3) est constamment fixée à l'élément stationnaire afin de fournir une réaction et une couronne dentée (R3, R4) est constamment reliée à l'arbre d'entrée,
un train de sortie (PC21) configuré comme un train de Ravigneaux, dans lequel une première roue planétaire (P1) transmet la puissance d'une première roue solaire (S1) à une première couronne dentée (R1) et une deuxième roue planétaire (P2) transmet la puissance d'une deuxième roue solaire (S2) à une deuxième couronne dentée (R2) et dans lequel le pignon long (LP1) engrène avec la première roue planétaire (P1) et le pignon long (LP2) avec la deuxième couronne dentée (R2), le support de pignons planétaire (CR21) étant constamment relié à l'arbre de sortie (Out) ; et
des premier, deuxième, troisième, quatrième, cinquième et sixième embrayages (CB123R, C1, C2467, C345, C568 et C78), la première vitesse en marche avant étant passée quand le premier embrayage (CB123R) et le deuxième embrayage (C1) sont embrayés, la deuxième vitesse en marche avant étant passée quand le premier embrayage (CB123R) et le troisième embrayage (C2467) sont embrayés, la troisième vitesse en marche avant étant passée quand le premier embrayage (CB123R) et le quatrième embrayage (C345) sont embrayés, la quatrième vitesse en marche avant étant passée quand le troisième embrayage (C2467) et le quatrième embrayage (C345) sont embrayés, la cinquième vitesse en marche avant étant passée quand le quatrième embrayage (C345) et le cinquième embrayage (C568R) sont embrayés, la sixième vitesse en marche avant étant passée quand le troisième embrayage (C2467) et le cinquième embrayage (C568R) sont embrayés, la septième vitesse en marche avant étant passée quand le troisième embrayage (C2467) et le sixième embrayage (C78) sont embrayés, la huitième vitesse en marche avant étant passée quand le cinquième embrayage (C568R) et le sixième embrayage (C78) sont embrayés et la marche arrière étant passée quand le premier embrayage (CB123R) et le cinquième embrayage (C568R) sont embrayés.

2. Transmission automatique comprenant
un arbre d'entrée (In),
un arbre de sortie (Out),
un élément stationnaire,
un train d'entrée (PC43) configuré comme un train de Ravigneaux, dans lequel une roue solaire (S3) est constamment fixée à l'élément stationnaire afin de produire une réaction et une couronne dentée (R3, R4) est constamment reliée à l'arbre d'entrée (In),
un train de sortie (PC21) configuré comme un train de Ravigneaux, dans lequel une première roue planétaire (P1) transmet la puissance d'une première roue solaire (S1) à une première couronne dentée (R1) et un pignon long (LP2) transmet la puissance d'une deuxième roue solaire (S2) à une deuxième couronne dentée (R2) et dans lequel le pignon long (LP1) engrène avec la première roue planétaire (P1), le support de pignons planétaire étant constamment relié à l'arbre de sortie (Out) ; et
des premier, deuxième, troisième, quatrième, cinquième et sixième embrayages (CB123R, C1, C2467, C345, C568 et C78), la première vitesse en marche avant étant passée quand le premier embrayage (CB123R) et le deuxième embrayage (C1) sont embrayés, la deuxième vitesse en marche avant étant passée quand le premier embrayage (CB123R) et le troisième embrayage (C2467) sont embrayés, la troisième vitesse en marche avant étant passée quand le premier embrayage (CB123R) et le quatrième embrayage (C345) sont embrayés, la quatrième vitesse en marche avant étant passée quand le troisième embrayage (C2467) et le quatrième embrayage (C345) sont embrayés, la cinquième vitesse en marche avant étant passée quand le quatrième embrayage (C345) et le cinquième embrayage (C568R) sont embrayés, la sixième vitesse en marche avant étant passée quand le troisième embrayage (C2467) et le cinquième embrayage (C568R) sont embrayés, la septième vitesse en marche avant étant passée quand le troisième embrayage (C2467) et le sixième embrayage (C78) sont embrayés, la huitième vitesse en marche avant étant passée quand le cinquième embrayage (C568R) et le sixième embrayage (C78) sont embrayés et la marche arrière étant passée quand le premier embrayage (CB123R) et le cinquième embrayage (C568R) sont embrayés.

3. Transmission automatique selon la revendication 1 ou 2, dans laquelle le premier embrayage est un embrayage de freinage (CB123R) et les deuxième, troisième, quatrième, cinquième et sixième embrayages (C1, C2467, C345, C568 et C78) sont des embrayages rotatifs et dans laquelle l'embrayage de freinage (CB123R) est configuré pour accoupler sélectivement l'élément stationnaire avec une couronne dentée (R2) du train de sortie (PC21), le premier embrayage rotatif (C1) est configuré pour accoupler sélectivement une couronne dentée (R4) du train d'entrée (PC43) à une roue solaire (S2) du train de sortie (PC21), le deuxième embrayage rotatif (C2467) est configuré pour accoupler sélectivement une roue solaire (S4) du train d'entrée (PC43) à une roue solaire (S2) du train de sortie (PC21), le troisième embrayage rotatif (C345) est configuré pour accoupler sélectivement une couronne dentée (R4) du train d'entrée (PC43) à une couronne dentée (R1) du train de sortie (PC21), le quatrième embrayage rotatif (C568R) est configuré pour accoupler sélectivement une couronne dentée (R4) du train d'entrée (PC43) à une roue solaire (S1) du train de sortie (PC21), le cinquième embrayage rotatif (C78) est configuré pour accoupler sélectivement une roue solaire (S4) du train d'entrée (PC43) avec une couronne dentée (R2) du train de sortie (PC21), et le train d'entrée (PC43) est configuré comme un train de Ravigneaux dans lequel un pignon long (LP3) transmet la puissance d'une première roue solaire (S3) à une première couronne dentée (R3) et un pignon planétaire (P4) et un pignon long (LP4) transmettent la puissance d'une deuxième roue solaire (S4) à une deuxième couronne dentée (R4) et le pignon long (P4/LP4) engrenant à la fois avec la deuxième couronne dentée (R4) et avec la deuxième roue planétaire (P4), la première roue solaire (S3) étant constamment reliée à l'élément stationnaire et la première couronne dentée (R3) étant constamment reliée à l'arbre d'entrée (In).
